(19) Europäisches Patentamt / European Patent Office / Office européen des brevets

(11) **EP 3 086 919 B1**

(12) **EUROPÄISCHE PATENTSCHRIFT**

(45) Veröffentlichungstag und Bekanntmachung des Hinweises auf die Patenterteilung:
**28.02.2024 Patentblatt 2024/09**

(21) Anmeldenummer: **14835618.1**

(22) Anmeldetag: **15.12.2014**

(51) Internationale Patentklassifikation (IPC):
**B29C 67/00** (2017.01)

(52) Gemeinsame Patentklassifikation (CPC):
**B29C 64/165**

(86) Internationale Anmeldenummer:
**PCT/DE2014/000631**

(87) Internationale Veröffentlichungsnummer:
**WO 2015/096826 (02.07.2015 Gazette 2015/26)**

(54) **VORRICHTUNG UND VERFAHREN MIT BESCHLEUNIGTER VERFAHRENSFÜHRUNG FÜR 3D-DRUCKVERFAHREN**

DEVICE AND METHOD FOR 3D PRINTING METHODS, WITH ACCELERATED EXECUTION

DISPOSITIF ET PROCÉDÉ À CONDUITE DE PROCÉDÉ ACCÉLÉRÉE POUR DES PROCÉDÉS D'IMPRESSION 3D

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.12.2013 DE 102013021891**

(43) Veröffentlichungstag der Anmeldung:
**02.11.2016 Patentblatt 2016/44**

(73) Patentinhaber: **voxeljet AG**
**86316 Friedberg (DE)**

(72) Erfinder:
• **EDERER, Ingo**
**82269 Geltendorf (DE)**
• **GÜNTHER, Daniel**
**81371 München (DE)**

(74) Vertreter: **Hoefer & Partner Patentanwälte mbB**
**Pilgersheimer Straße 20**
**81543 München (DE)**

(56) Entgegenhaltungen:

| | |
|---|---|
| EP-A1- 3 015 252 | WO-A2-2004/106041 |
| DE-A1-102007 040 755 | DE-A1-102011 111 498 |
| US-A1- 2001 050 448 | US-A1- 2002 105 114 |
| US-A1- 2012 211 155 | |

## Beschreibung

Die Erfindung bezieht sich auf ein Verfahren und eine Vorrichtung zum Herstellen dreidimensionaler Modelle mit erhöhter Prozessgeschwindigkeit.

In der europäischen Patentschrift EP 0 431 924 B1 wird ein Verfahren zur Herstellung dreidimensionaler Objekte aus Computerdaten beschrieben. Dabei wird ein Partikelmaterial in einer dünnen Schicht auf eine Plattform aufgetragen und dieses selektiv mittels eines Druckkopfes mit einem Bindermaterial bedruckt. Der mit dem Binder bedruckte Partikelbereich verklebt und verfestigt sich unter dem Einfluss des Binders und gegebenenfalls eines zusätzlichen Härters. Anschließend wir die Plattform um eine Schichtdicke in einen Bauzylinder abgesenkt und mit einer neuen Schicht Partikelmaterial versehen, die ebenfalls, wie oben beschrieben, bedruckt wird. Diese Schritte werden wiederholt, bis eine gewisse, erwünschte Höhe des Objektes erreicht ist. Aus den bedruckten und verfestigten Bereichen entsteht so ein dreidimensionales Objekt.

Dieses aus verfestigtem Partikelmaterial hergestellte Objekt ist nach seiner Fertigstellung in losem Partikelmaterial eingebettet und wird anschließend davon befreit. Dies erfolgt beispielsweise mittels eines Saugers. Übrig bleiben danach die gewünschten Objekte, die dann von Pulveranhaftungen z.B. durch händisches Abbürsten befreit werden.

BESTÄTIGUNGSKOPIE

Das 3D-Drucken auf Basis pulverförmiger Werkstoffe und Eintrag flüssiger Binder ist unter den Schichtbautechniken das schnellste Verfahren.

Mit diesem Verfahren lassen sich verschiedene Partikelmaterialien, dazu zählen - nicht erschöpfend - natürliche biologische Rohstoffe, polymere Kunststoffe, Metalle, Keramiken und Sande, verarbeiten.

Besonders wirtschaftlich stellt sich das in DE 10 2010 015 451 beschriebene Schrägdruckverfahren dar. Hier wird das Partikelmaterial in Form eines "Pulverkuchens" auf einem Förderband aufgebaut. Es entsteht ein Druckbereich und ein Entpackbereich. Die Vorrichtung arbeitet kontinuierlich und es kommt zu keiner Unterbrechung durch Entpackvorgänge.

Ein weiteres Verfahren so wie eine weitere Vorrichtung zum Herstellen dreidimensionaler Modelle ist aus der US 2001/050448 A1 bekannt.

Die additiven Fertigungsverfahren sind nicht mehr ausschließlich für den Bau von Prototypen in der Anwendung. Vielmehr verschieben sich die Grenzstückzahlen ab denen konventionelle, werkzeugbasierte Fertigungsmethoden kostengünstiger sind nach oben.

Dennoch ist bisher die additive Fertigung erst im Bereich von Kleinserien bis zu ca. 10000 Gleichteilen für eine Serienproduktion interessant. Ein wichtiger Kostenfaktor sind die Produktionszeiten auf den 3D-Druckmaschinen, die auch als Volumenleistung bezeichnet wird. Die bisher bekannten und auf dem Markt angebotenen 3D-Druckmaschinen weisen für die Herstellung von größeren Serien eine zu niedrige Volumenleistung auf, um wirtschaftlich mit anderen bekannten Technologien und Herstellungsverfahren konkurrieren zu können.

Die aus dem Stand der Technik bekannten 3D-Druckmaschinen und Verfahren sind zwar in Hinsicht auf die einsatzfähigen Materialien und die Qualitätsmerkmale im Laufe der Jahre stark verbessert worden. Allerdings konnten bisher keine zufriedenstellenden Lösungen zur Erhöhung der Volumenleistung bei gleichbleibendem Qualitätsstandard gefunden werden. Auch bisher gemachte Vorschläge zu einer Erhöhung der Verfahrensgeschwindigkeit konnten den Anforderungen an eine erhöhte Serienproduktion bis hin zu einer Großserienherstellung nicht gerecht werden, da viele verschiedene Parameter in Einklang gebracht werden müssen und aufeinander abgestimmt werden müssen, was sich als schwierig erwiesen hat. Dieses Problem konnte obwohl mit 3D-Druckverfahren nun schon jahrzehntelang gearbeitet wird, bisher noch nicht gelöst werden.

Somit besteht schon seit langer Zeit das Bedürfnis ein 3D-Druckverfahren und entsprechende Druckmaschinen zur Verfügung zu haben, um die Vorteile des 3D-Druckes nutzen zu können bei gleichzeitiger Erfüllung der Volumen- sowie Qualitätsanforderungen von größeren Serien.

Eine der vorliegenden Anmeldung zugrundeliegenden Aufgabe war es damit ein Verfahren und eine Vorrichtung bereitzustellen mit denen die Produktionsleistung von Pulverbettbasierten 3D-Druckern und 3D-Druckverfahren deutlich gesteigert werden kann.

Eine weitere Aufgabe bestand darin, eine Volumensteigerung der 3D-Druckmaschinen und -Verfahren bei gleichzeitiger Beibehaltung eines hohen Qualitätsstandards zu erreichen.

Schließlich bestand eine Aufgabe darin die Nachteile des Standes der Technik zu vermindern oder im Wesentlichen zu beseitigen oder gänzlich zu überwinden.

Aus dem Stand der Technik sind einige Versuche bekannt, die oben dargestellten Probleme zu lösen, allerdings konnten diese bisher keine wirklich zufriedenstellende Lösung bereitstellen.

Im Vergleich zu konkurrierenden Verfahren wie etwa dem selektiven Lasersintern oder dem FDM-Verfahren ist der pulverbettbasierte 3D-Druck in Bezug auf die Geschwindigkeit überlegen. Dies liegt zum einen an der Beschichtertechnik, mit der ein wesentlicher Teil der Bauteilmasse als Pulver schnell aufgetragen wird. Zum zweiten liegt dies an der Verwendung von Tintenstrahldruckköpfen mit tausenden individuell ansteuerbaren Düsen.

Ein Ansatz zur Beschleunigung des Systems ist es, die Verfahrgeschwindigkeiten der einzelnen Komponenten zu steigern. Im Falle des Beschichters bedeutet dies den Durchsatz durch das System zu steigern. Ein solches Vorgehen wird allerdings durch gewisse Eigenschaften des Partikelmaterials begrenzt. Steigert man die Geschwindigkeit über ein bestimmtes Maß hinaus, werden durch den Beschichter darunterliegende Schichten beschädigt.

Derselbe Ansatz wird verfolgt wenn man die Druckgeschwindigkeit erhöht. Aber auch hier gibt es begrenzende Faktoren. Beispielsweise sind Geschwindigkeiten weit über 0,5 m/s bei piezobasierten Tintenstrahldruckköpfen unüblich, weil sich das Druckbild in seiner Kantenschärfe deutlich verschlechtert.

Die Größe des Druckkopfes ist ebenso ein Faktor, der maßgeblich die Systemgeschwindigkeit beeinflusst. Bei einem relativ zum Baufeld kleinen Druckkopf kann dieser mäanderförmig über das Baufeld geführt werden, um aller Bereiche zu erfassen. Dies bedeutet im Allgemeinen eine nicht unerhebliche Schichtzeit. Eine Verdoppelung der Druckbreite kann je nach Aufbau des Systems die Druckzeit nahezu halbieren. Nicht unüblich sind nach dem Stand der Technik Druckköpfe, die das gesamte Baufeld in einer geraden Fahrt bedrucken können.

Die hierbei erreichbare Volumenleistung ist aber weiterhin für eine echte Serienproduktion nicht ausreichend.

Im Folgenden werden einige Begriffe der Erfindung näher erläutert.

Im Sinne der Erfindung sind "3D-Druckverfahren" alle aus dem Stand der Technik bekannten Verfahren, die den Aufbau von Bauteilen in dreidimensionalen Formen ermöglichen und mit den beschriebenen Verfahrenskomponenten und Vorrichtungen kompatibel sind. Insbesondere sind dies Pulver-basierte Verfahren, wie beispielsweise SLS (Selective Laser Sintering).

"Selektiver Binderauftrag" oder "Selektiver Bindersystemauftrag" oder "Selektiver Binderflüssigkeitsauftrag" kann im Sinne der Erfindung während jedem Partikelmaterialauftrag erfolgen oder je nach den Erfordernissen des Formkörpers und zur Optimierung der Formkörperherstellung auch unregelmäßig erfolgen, d.h. nicht linear und parallel nach jedem Partikelmaterialauftrag. "Selektiver Binderauftrag" oder "Selektiver Bindersystemauftrag" kann somit individuell und im Verlauf der Formkörperherstellung eingestellt werden.

"Formkörper" oder "Bauteil" oder "3D-Formteil" oder "Modell" im Sinne der Erfindung sind alles mittels des erfindungsgemäßen Verfahrens oder/und der erfindungsgemäßen Vorrichtung hergestellte dreidimensionale Objekte, die eine Formfestigkeit aufweisen.

Als "Vorrichtung" zum Durchführen des erfindungsgemäßen Verfahrens kann jede bekannte 3D-Druckvorrichtung verwendet werden, die die erforderlichen Bauteile beinhaltet. Übliche Komponenten beinhalten Beschichter, Baufeld, Mittel zum Verfahren des Baufeldes oder anderer Bauteile, Dosiervorrichtung und Wärmemittel und andere dem Fachmann bekannte Bauteile, die deshalb hier nicht näher ausgeführt werden.

Als "Partikelmaterialien" können alle für den Pulver-basierten 3D Druck bekannten Materialien verwendet werden, insbesondere Sande, Keramikpulver, Metallpulver, Kunststoffe, Holzpartikel, Faserwerkstoffe, Cellulosen oder/und Lactosepulver. Das Partikelmaterial ist vorzugsweise ein trocken frei fließendes Pulver, aber auch ein kohäsives schnittfestes Pulver kann verwendet werden.

"Bauraum" ist der geometrische Ort in dem die Partikelmaterialschüttung während des Bauprozesses durch wiederholtes Beschichten mit Partikelmaterial wächst. Im Allgemeinen wird der Bauraum durch einen Boden, die Bauplattform, durch Wände und eine offene Deckfläche, die Bauebene, begrenzt.

"Vorrichtungsmittel" im Sinne der Erfindung sind alle in einer erfindungsgemäßen Vorrichtung enthaltenen Mittel zum Durchführen des erfindungsgemäßen Verfahrens wie Beschichter (Recoater), Druckkopf, Bauplattform, Steuereinheiten, Wechselbehälter, Führungsschienen, Antriebsmittel etc.

Unter "Prozesseinheit" im Sinne der Erfindung können Kombinationen von Vorrichtungsmitteln sein, wie z.B. Beschichter und Druckkopf, die vorzugsweise zusammen oder gekoppelt angeordnet sind und vorzugsweise zusammen verfahren werden in gleicher oder koordinierter Geschwindigkeit und Anordnung oder Richtung.

Ein "Baubehälter" im Sinn der Erfindung realisiert einen Bauraum. Er weist demnach einen Boden, Wände und eine offene Zugangsfläche, die Bauebene, auf. Der Baubehälter weist immer Teile auf, die sich relativ zum Gestell der 3D-Druckvorrichtung nicht bewegen. Austauschbare Baubehälter ermöglichen es, die Maschine quasi ständig zu betreiben. Während die Teile eines ersten Bauvorganges ausgepackt werden, können innerhalb der Maschine in einem zweiten Baubehälter bereits neue Teile gedruckt werden.

"Beschichter" bezeichnet in dieser Schrift ein technisches Aggregat, das Partikelmaterial bevorratet, dosieren kann und gleichzeitig nivellieren und glattstreichen kann. Erfindungsgemäß kann eine 3D-Druckvorrichtung mehrere Beschichter aufweisen. Dabei können sich mehrere Beschichter gewisse funktionale Einheiten teilen. Derartige Vorrichtungsteile werden auch als "Beschichtermittel" bezeichnet.

"Dosiervorrichtung", "Druckkopf" oder "Tintenstrahldruckkopf" wird in dieser Schrift synonym mit dem Begriff selektive Verfestigungseinrichtung genannt. In erste Linie ist ein System gemeint, das in der Lage ist aufgrund von digitalen Ansteuersignalen matrizenartige Daten als Mikrotöpfchen einer Bindeflüssigkeit auf das Baufeld aufzubringen. Ebenso können aber auch laserbasierte Verfahren eine solche Verfestigungseinrichtung darstellen. Derartige Vorrichtungsteile werden auch als "Druckmittel" bezeichnet.

"Linehead" bezeichnet einen Druckkopf der mindestens die gesamte Baufeldbreite aufweist und diese der Auflösung entsprechend mit Flüssigkeit oder "Information" belegen kann.

"Information" ist eine Abstraktion. Bei dem erfindungsgemäßen Verfahren kann "Information" eine lokale Verklebung bedeuten. Diese kann durch Flüssigkeit oder Energieeintrag erfolgen. Der Begriff Information wird verwendet, da an einer Position nur Eigenschaften geändert werden. Oft ist diese Eigenschaft die Festigkeit. Diese ist aber nicht zwingend.

Die "Druck- und Beschichterebene" ist die Abstraktion des Ortes des momentan ablaufenden Bauprozesses. Da konstruktiv die Dosiereinheit und der Beschichter auf einer Verfahreinheit mit gemeinsamen Komponenten auf nahezu einer Höhe in der Vorrichtung bewegt werden, wird in dieser Beschreibung die "Druck- und Beschichterebene" als in der Oberkante einer neu aufgebrachten Schicht liegend betrachtet.

Die "Bauplattform" im Sinne der Erfindung bewegt sich relativ zur Druck- und Beschichterebene. Diese Relativbewegung findet während des Bauprozesses in unterbrochenen Bewegungen in Vielfachen der Schichtstärke statt. Sie definiert die eigentliche Schichtstärke. Beim oben beschriebenen Schrägdruckverfahren ist die Bauplattform ein Förderband. Hier ist der Vorschub nicht gleich der Schichtstärke.

"Schrägdrucker" ist eine 3D-Druckvorrichtung bei der auf eine gegenüber der Horizontalen geneigten Ebene beschichtet und gedruckt wird. Dadurch entsteht ein Pulverkuchen der schichtweise mit einem Schrittförderer vom Druckbereich abgezogen wird. Der Materialstrang endet dann in einem Entpackbereich. Hier werden die Bauteile entnommen, während der Druck weiterhin produziert. Diese Beschreibung betrifft sinngemäß auch den Begriff "Schrägdruckverfahren".

"Schichtweise verfahren" im Sinne der Erfindung bezeichnet in einem Wechselbehälter oder in einer anderen horizontalen Bauebene den Vorgang, dass das Baufeld um eine Schichtstärke abgesenkt wird oder das oder die über dem Baufeld befindlichen Vorrichtungsteile um eine Schichtstärke hochgefahren werden. In einem kontinuierlichen Verfahren bezeichnet "schichtweise verfahren" das Verfahren des aufgetragenen Baumaterials (des Baumaterialblocks in der Druckmaschine) um eine Schichtstärke, sodass eine neue Schicht an Partikelmaterial aufgetragen werden kann und so kontinuierlich ein Schichtauftrag und selektiver Binderflüssigkeitsauftrag erfolgen kann. Dies kann in einem Winkel zur Bauplattform erfolgen.

Die Erfinder konnten nunmehr eine Lösung finden, die es ermöglicht, die Volumenleistung bei zufriedenstellendem Qualitätsniveau signifikant zu steigern.

Es gelang den Erfindern eine Aufhebung der aus den Lösungsansätzen des Standes der Technik bekannten Einschränkungen zu erreichen, indem erfindungsgemäß ein Parallelisieren der Vorgänge von Beschichten und Bedrucken vorgenommen wurde. Werden diese Vorgänge im Wesentlichen gleichzeitig ausgeführt ist, es möglich mehrere Beschichter und Druckeinheiten hintereinander anzuordnen und in einer Überfahrt mehrere Schichten abzulegen und selektiv zu verfestigen. Dazu sind keine Steigerungen der Verfahrgeschwindigkeiten oder sonstige Maßnahmen nötig, die die Qualität der produzierten Produkte negativ beeinflussen.

Im Folgenden werden bevorzugte Ausführungsformen dargestellt.

In einem Aspekt betrifft die Erfindung ein Verfahren zum Herstellen dreidimensionaler Modelle mittels Schichtaufbautechnik, wobei partikelförmiges Baumaterial in einer definierten Schicht auf ein Baufeld aufgetragen wird und eine Binderflüssigkeit selektiv auf das Baumaterial aufgebracht wird, um einen gewissen Betrag verfahren wird und diese Schritte wiederholt werden bis das gewünschte Objekt erzeugt ist, wobei die Schritte des Auftragens und Aufbringens im Wesentlichen gleichzeitig stattfinden.

Durch diese erfindungsgemäße Verfahrensführung konnte vorteilhafter Weise ein erhöhte Volumengeschwindigkeit bei annehmbarer Qualität der Formteile erreicht werden.

Zum Auftragen und Aufbringen der verschiedenen Materialien werden geeignete Vorrichtungsmittel verwendet, die mit den anderen Vorrichtungsmittel kompatibel sind. Das partikelförmige

Baumaterial wird mit einem Beschichter aufgetragen oder/und die Binderflüssigkeit mit einem Druckkopf aufgebracht.

In dem erfindungsgemäßen Verfahren werden Beschichter und Druckkopf angeordnet und vorzugsweise wird das Vorrichtungsmittel Druckkopf dem Vorrichtungsmittel Beschichter in einem definierten Abstand, vorzugsweise in einem Abstand von 300 mm - 1000 mm, mehr bevorzugt von 50 mm - 300 mm, noch mehr bevorzugt unmittelbar, folgen.

In dem erfindungsgemäßen Verfahren sind Antriebsmittel vorzugsweise vorgesehen, die die Vorrichtungsmittel mit einer Geschwindigkeit von 0,02 m/s bis 1 m/s antreiben und verfahren, wobei die verschiedenen Vorrichtungsmittel mit derselben Geschwindigkeiten verfahren werden.

Das erfindungsgemäße Verfahren kann in Bezug auf das Verfahren der Vorrichtungsmittel Beschichter und Druckkopf in verschiedener Weise erfolgen. Erfindungsgemäß wird im

Vor und Zurückfahren gearbeitet. Dabei erfolgt das Zurückfahren und der Rücklauf der Vorrichtungsmittel im Eilgang, vorzugsweise mit einer Geschwindigkeit von 0,5 m/s bis 5 m/s.

Erfindungsgemäß werden mehrere Vorrichtungsmittel von Beschichter und Dosiereinheit eingesetzt, vorzugsweise jeweils 2 bis 20,

mehr bevorzugt 4 bis 15, somit können mehrere Schichten in einer Überfahrt aufgebaut werden. Vorzugsweise bilden mehrere Vorrichtungsmittel mehrere Schichten in einer Überfahrt sowohl im Voralsauch im Rücklauf.

Das erfindungsgemäße Verfahren baut vorzugsweise mit mehreren Vorrichtungsmittel oder Prozesseinheiten mehrere Schichten auf einer kontinuierlich arbeitenden Fördereinheit auf.

Das erfindungsgemäße Verfahren kann als Basisverfahren ein Schrägdruckverfahren, ein Batchverfahren oder/und kontinuierliches Verfahren ausgebildet sein.

Weiterhin ist ein Aspekt der Erfindung eine Vorrichtung zum Herstellen dreidimensionaler Modelle mittels Schichtaufbautechnik, die mindestens zwei, vorzugsweise 3 - 20, Druckmittel und mindestens zwei, vorzugsweise 2 - 20, Beschichtermittel nachgeordnet aufweist.

Diese Aspekte der Vorrichtung können auch kombiniert verwirklicht sein.

Das Druckmittel kann in jeder geeigneten Weise ausgeführt sein und wird mit den anderen Vorrichtungsmitteln abgestimmt. Vorzugsweise ist es als Linehead ausgeführt. Vorzugsweise werden das/die Druckmittel und das/die Beschichtermittel mit einer Geschwindigkeit von 0,02 m/s bis 1 m/s verfahren.

In einer erfindungsgemäßen Vorrichtung sind die Druckmittel und die Beschichtermittel so angeordnet, dass sie im Vor- wie im Rücklauf arbeiten. Dabei sind das/die Druckmittel und das/die Beschichtermittel in verschiedenen Ebenen, vorzugsweise in ihrer Höhe, vorzugsweise in der Z-Achse, verstellbar.

In der erfindungsgemäßen Vorrichtung sind das/die Druckmittel und das/die Beschichtermittel versetzt angeordnet, vorzugsweise sind sie so angeordnet, dass sie mehrere Schichten übereinander auftragen und aufbringen können.

Die erfindungsgemäße Vorrichtung kann als ein Schrägdrucker, ein Batchdrucker oder ein kontinuierlich arbeitender Drucker ausgeführt sein. Außerdem kann sie eine kontinuierlich arbeitende Fördereinheit aufweisen. Vorzugsweise ist die erfindungsgemäße Vorrichtung als ein Schrägdrucker ausgeführt oder/und die Vorrichtungsmittel sind in einem vertikalen Karussell oder radartig angeordnet.

Weitere bevorzugte Ausführungsformen sind im Folgenden dargestellt.

In den Grundzügen wird ein System zum schichtweisen Aufbau von Modellen mit Tintenstrahldrucktechnik verwendet. Dabei gliedert sich der Ablauf nach dem Stand der Technik wie folgt: Es wird eine Pulverschicht auf eine Bauplattform aufgetragen und nivelliert. Im Anschluss wird die Schicht gemäß der Schichtdaten des 3D-Modells mit einem Fluid bedruckt. Die bedruckten Stellen ändern dabei eine oder mehrere Eigenschaften (Festigkeit, Wasserlöslichkeit etc.). Oft verfestigt das Material durch eine Verbindungskomponente im flüssigen Binder (z.B. einem Kleber). Auch sind Binder als Pulverbestandteile üblich. Nach dem Druckprozess wird die Bauplattform abgesenkt und der Prozess beginnt von vorne.

Diese Schritte werden solange wiederholt, bis das Bauteil komplett im mitgebauten Pulverkuchen vorliegt.

Das erfindungsgemäße Verfahren unterscheidet sich hiervon dadurch, dass während die Schicht aus Partikelmaterial aufgetragen wird gleichzeitig bereits auf die entstehende Schicht gedruckt wird. Dabei sind naturgemäß Phasen vorhanden, an denen nur beschichtet und nur gedruckt wird. Eine Phase von gleichzeitiger Aktion ist aber erfindungsgemäß immer gegeben.

Ein solches Vorgehen ist mit der verwendeten Beschichtertechnologie in Einklang zu bringen. Werden bespielweise, wie häufig bei Vorrichtungen nach dem Stand der Technik, Vibrationen angewandt, muss konstruktiv ausgeschlossen werden, dass diese auf den Druckkopf übertragen werden.

Diese Parallelisierung lässt die Zeit für den Druckvorgang quasi in der Zeit für den Beschichtungsvorgang verschwinden.

Eine erfindungsgemäße Vorrichtung, die diese Parallelisierung nutzbar macht, weist vorteilhafterweise einen sogenannten Linehead auf. Dieser ist in der Lage das gesamte Baufeld in einem Durchlauf zu bedrucken. Damit kann der Druckkopf direkt hinter dem Beschichter laufen und die Schicht fertigstellen. Im Gegensatz zu den Vorrichtungen des Standes der Technik wird der Rücklauf leer, also ohne zu beschichten oder zu drucken, durchgeführt. Dabei können höchste Verfahrgeschwindigkeiten genutzt werden.

Weiterhin kann, damit die zu erreichende Prozessbeschleunigung besser genutzt werden kann, ein zweiter Beschichter verbaut werden. Der Druckkopf ist bei dieser Vorrichtung von zwei Beschichtern gewissermaßen umgeben. Damit kann ein Beschichten mit gleichzeitigem Drucken im Vor- wie im Rücklauf der Vorrichtung stattfinden.

Die Schichtzeiten einer solchen Vorrichtung sind meist nur durch die mögliche Beschichtungsgeschwindigkeit in Richtung kleiner Zeiten begrenzt. Dabei können je nach Materialsystem beispielsweise bis zu 0,333 m/s erreicht werden. Für einen Meter Baufeld ergäbe sich eine Aufbaurate von 1 Schicht / 3 s. Mit einer Schichtstärke von 300 $\mu$m Dicke und einer Beschichterbreite von 1m ergibt dies eine Volumenleistung von ca. 0,1 l/s. Dies entspricht 360 l/h. Bei Vorrichtungen des Standes der Technik sind für eine Schicht dieser Größe ca. 40 s üblich. Die Volumenleistung liegt folglich 10- fach niedriger.

Der größte Nutzen der Parallelisierung der Beschichtung und Druckens liegt in der Möglichkeit, die Druck- und Beschichtereinheiten zu staffeln. Die oben beschriebene Vorrichtung mit 2 Beschichtern und 1 Druckkopf kann ebenso mit 4 Beschichtern und 3 Druckköpfen ausgeführt werden. Die Beschichter und die Druckköpfe sind dabei in der Höhe zueinander versetzt und bauen als eine Gruppe jeweils eine Schicht auf.

Ein solcher Drucker legt bei einer Überfahrt zwei Schichten ab. Damit sinkt nach obiger Berechnung die Schichtzeit auf 1,5 Sekunden. Die Volumenleistung steigt auf 720 l/h.

Die Zahl der Einheiten ist im Prinzip unbegrenzt. So kann ein Drucker auch mit mehr als 8 Beschichtern und 7 Druckköpfen ausgestattet sein. Die Schichtzeit fällt jetzt unter 1 s. Die Volumenleistung übersteigt 1 m³/h.

Unter Einsatz von sehr vielen Druckköpfen und Beschichtereinheiten kann auch ein kontinuierlich arbeitendes Druckgerät erzeugt werden. Dieses Gerät würde nicht mehr einen Baubehälter füllen, sondern auf ein Förderband arbeiten. Das Produktionsprinzip wäre ähnlich wie in der Schrift DE 10 2010 015 451 beschrieben. Die Volumenleistung ist bei einer 1m breiten Vorrichtung und ca. 1500 Beschichtern und Druckeinheiten 540000 l/h.

Eine solche Vorrichtung würde mit konventionellen Fertigungsverfahren in Bezug auf die Taktzeiten problemlos konkurrieren können.

Die hohen Investitionskosten einer solchen Vorrichtung können wiederum durch den Einsatz von Verfahreinheiten für die Prozesseinheiten gedämpft werden. Dabei werden die Prozesseinheiten endlos geführt und können außerhalb des Schichtbildungsbereiches gewartet werden. Für eine solche Anordnung ist ein umlaufender Kettentrieb oder ein Rad, das mit Prozesseinheiten bestückt ist, geeignet.

Kurze Beschreibung der Figuren, die bevorzugte Ausführungsformen darstellen

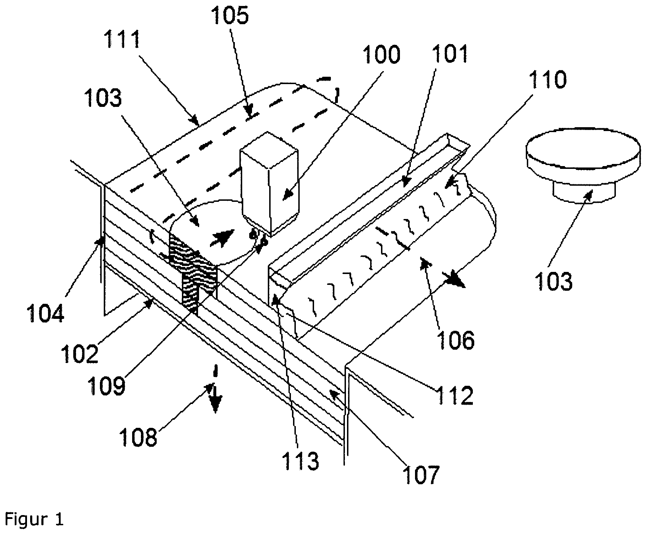

Figur 1: Schematische Darstellung der Komponenten eines pulverbasierten 3D-Druckers als geschnittener Schrägriss.
Figur 2: Schema des Ablaufes eines konventionellen 3D-Druckprozesses.
Figur 3: Illustration eines Druckvorgangs mit parallelem Beschichten und Bedrucken nicht gemäß der Erfindung.

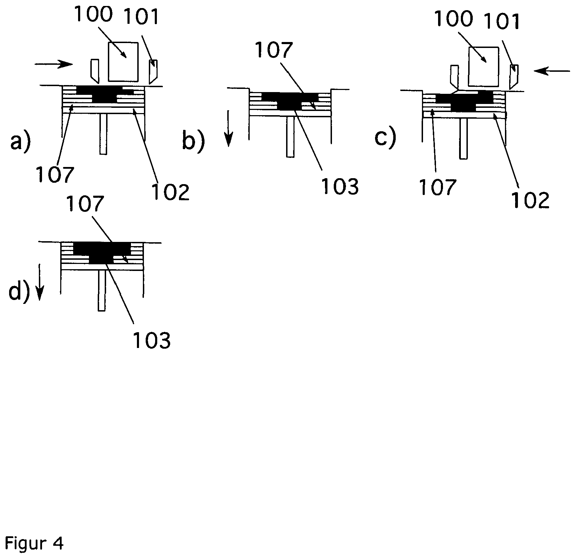

Figur 4: Vorrichtung beim Drucken im Vor- und im Rücklauf nicht gemäß der Erfindung.
Figur 5: Vorrichtung mit gestaffelten Beschichtern und Druckköpfen gemäß der Erfindung.
Figur 6: Vorrichtung mit 7 Druckköpfen und 8 Beschichtern gemäß der Erfindung.

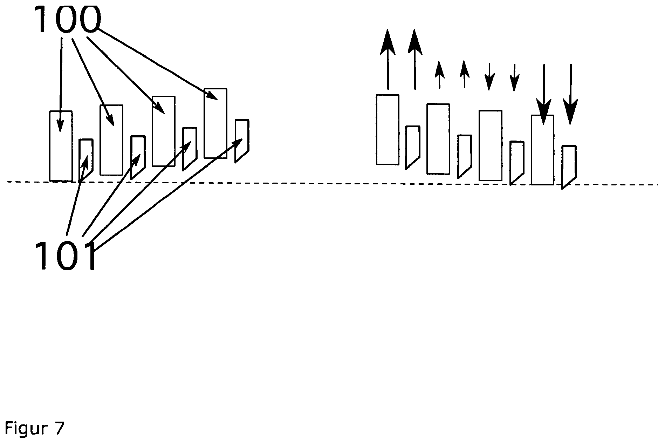

Figur 7: Vorrichtung mit verschiebbaren Einheiten nicht gemäß der Erfindung.
Figur 8: Vorrichtung die auf ein Förderband arbeitet nicht gemäß der Erfindung.
Figur 9: Vorrichtung nicht gemäß der Erfindung.

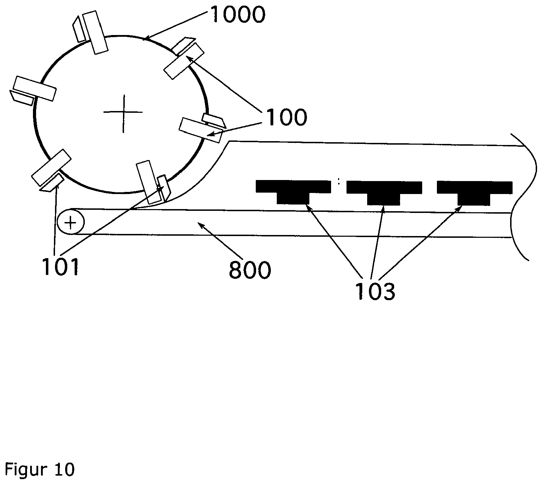

Figur 10: Vorrichtung nicht gemäß der Erfindung.

Ausführungsbeispiele

Ein Verfahren gemäß der Erfindung ist in Anspruch und eine Vorrichtung gemäß der Erfindung in Anspruch 7 definiert.

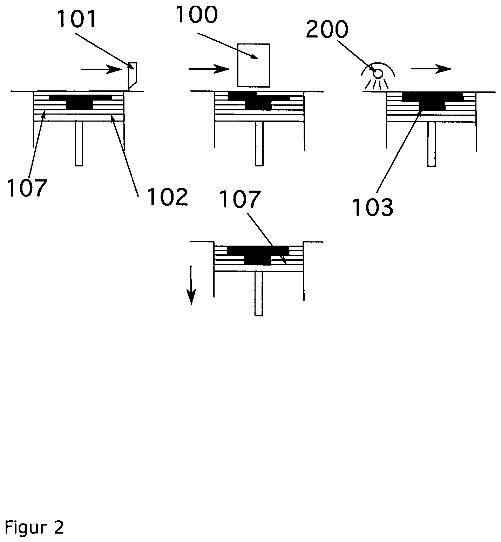

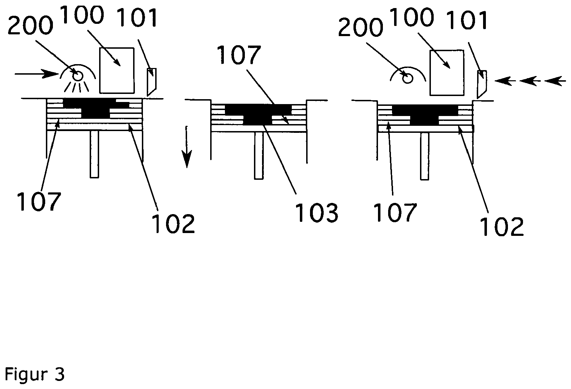

Eine Vorrichtung nach dem Stand der Technik weist einen Pulverbeschichter (101) auf (Figur 2). Mit diesem wird Partikelmaterial auf eine Bauplattform (102) aufgebracht und geglättet (Figur 3(a)). Das aufgebrachte Partikelmaterial kann aus verschiedensten Materialien bestehen. Beispielsweise können Sande, Keramikpulver, Metallpulver, Kunststoff, Holzpartikel, Faserwerkstoff, Cellulosen, Lactosepulver usw. verwendet werden. Die Fließeigenschaften dieser Materialien können stark unterschiedlich ausfallen. Verschiedene Beschichtertechniken lassen die Schichtbildung von trockenen frei fließenden Pulvern, über kohäsive schnittfeste Pulver, bis hin zu flüssigkeitsbasierten Dispersionen zu. Die Höhe der Pulverschichten (107) wird durch die Bauplattform (102) bestimmt. Sie wird nach dem Aufbringen einer Schicht abgesenkt. Beim nächsten Beschichtungsvorgang wird das entstandene Volumen verfüllt und der Überstand glattgestrichen.

Nach einem Beschichtungsprozess wird die Schicht mittels eines Tintenstrahldruckkopfes (100) mit einer Flüssigkeit bedruckt (Figur 2(b)). Das Druckbild entspricht dem Schnitt durch das Bauteil in der aktuellen Bauhöhe der Vorrichtung. Die Flüssigkeit trifft auf das Partikelmaterial und diffundiert langsam hinein.

Im Anschluss kann die Schicht optional erwärmt werden (Figur 2(c)). Dazu kann beispielsweise ein IR-Strahler (200) über das Baufeld geführt werden. Dieser kann mit der Achse des Beschichtungssystems gekoppelt sein. Während des Heizens verdampft ein Teil des flüssigen Bindemittels. Bei feuergefährlichen Flüssigkeiten wird das verdampfende Material sofort abgesaugt.

Im Anschluss an diesen optionalen Heizprozess wird die Bauplattform (102) um die Höhe der bereitgestellten Schicht abgesenkt. Die Schritte Schichtbilden, Bedrucken, Erwärmen und Absenken werden nun solange wiederholt, bis das gewünschte Bauteil (103) vollständig erstellt ist.

Figur 3 zeigt den Kerngedanken eines erfindungsgemäßen Verfahrens. Dem Beschichter (101) folgt direkt der Druckkopf (100). Dieser verfestigt das entstehende Bauteil wie bei einer Vorrichtung des Standes der Technik.

Eine erfindungsgemäße Vorrichtung berücksichtigt den Umstand, dass vom Beschichter Vibrationen auf den Druckkopf übertragen werden können. Dazu sind konstruktive Maßnahmen vorgesehen, die entweder Vibrationen reduzieren oder deren Ausbreitung über die Maschinenkomponenten hinweg vermeiden.

Der Rücklauf erfolgt bei dieser Ausführungsform der Erfindung im Eilgang. Dabei können wesentlich höhere Geschwindigkeiten als beim Beschichtungsvorgang erzielt werden. Sind es bei Beschichtungsvorgang max. 0,3 m/s können im Rücklauf mit Komponenten des Standes der Technik mehr als 1 m/s gefahren werden.

Da in Summe sich die Schichtzeit aus der Zeit für die Beschichterfahrt und die Zeit für den Rücklauf zusammengesetzt, reduziert sich die Schichtzeit deutlich. Die Differenz ist die Zeit für eine Druckfahrt minus der Zeit für den Rücklauf.

Erfindungsgemäß bevorzugt sind hierbei Vorrichtungen die des Weiteren Nebenzeiten reduzieren. Das sind zum einen Nachfüllvorgänge für Partikelmaterial und Fluid. Diese werden den Einheiten über flexible Schläuche, Rohr oder Rinnensystem zugeführt. Damit können fehlende Materialien während des laufenden Prozesses ersetzt werden.

Die Druckkopfreinigung ist ebenso anzupassen. Diese sollte, um dem Leistungszuwachs durch die Erfindung Genüge zu tun, eine Reinigung während einer Überfahrt in Richtung Baufeld ermöglichen.

Nach erfolgtem Druck- und Beschichtungprozess wird die Bauplattform um eine Schichtstärke abgesenkt und der Prozess beginnt von neuem. Ebenso kann die Erfindung als einem sog. Schrägdrucker ausgeführt werden. Hier wird wie in Schrift DE 10 2010 015 451 beschrieben auf eine gegenüber der horizontalen gekippten Ebene beschichtet und gedruckt. Auch hier kann eine Parallelisierung erfolgen. Das Absenken um eine Schichtstärke ist hier als ein Verfahren des Förderbandes auszuführen.

Der Rücklauf stellt im Sinne der Prozessgeschwindigkeit eine ungenutzte Zeitspanne dar. Deshalb ist die erfindungsgemäße Vorrichtung um eine Beschichtereinheit erweitert.

Die Beschichter sind jetzt vor und hinter den Druckkopf angeordnet. Vor dem Rücklauf wird die Bauplattform um eine Schichtstärke abgesenkt. Ebenso nach erfolgter Fahrt vor dem Vorlauf.

Mit dieser Vorrichtung wird im Vor- und im Rücklauf gleichzeitig beschichtet und gedruckt.

Die Folge ist eine weitere Reduktion der Zeit pro Schicht. Hierbei ist nur noch die Zeit für eine Überfahrt mit der Beschichtungsgeschwindigkeit anzusetzen.

Im Sinne der Erfindung sind die Einheiten Druckkopf (100) und Beschichter (101) zu einer Prozesseinheit zusammengefasst.

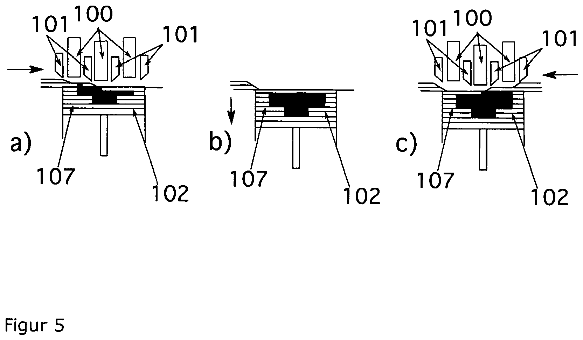

Wie Figur 5 zeigt, sind die Prozesseinheiten um eine Schichtstärke versetzt angeordnet. Damit ist es jetzt möglich, während einer Überfahrt zwei Schichten gleichzeitig aufzubauen. Dies ist im Vor- und im Rücklauf möglich. Die Schichtzeit halbiert sich pro Prozesseinheit für Vor- und Rücklauf.

Am Rande des Baubehälters ergibt sich gegenüber Druckern des Standes der Technik eine Besonderheit. Hier werden Schichten aufgebaut, die beim Rücklauf höher liegen als der unterste Druckkopf. Deshalb muss die Anordnung immer derart ausgestaltet sein, dass vor dem tiefsten Druckkopf ein Beschichter liegt, der das Partikelmaterial vom Druckkopf fern halten kann, indem er das Pulver in einen weiter außen liegenden Schacht schiebt.

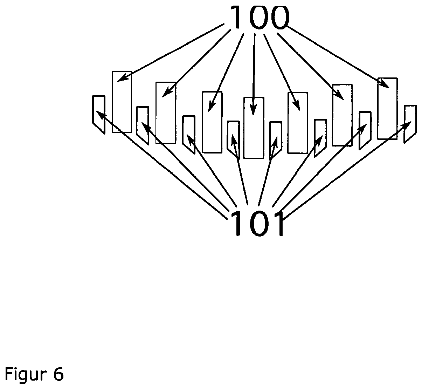

Eine solche Vorrichtung kann nahe beliebig ausgebaut werden. Figur 6 zeigt eine Anordnung aus 4 Prozesseinheiten für Vor- und Rücklauf. Diese Vorrichtung besteht aus 7 Druckköpfen und 8 Beschichtern.

Die Zusammenhang zwischen Schichten n pro Fahrt und Beschichter- b bzw. Druckkopfzahl d ist folgender:

$$d = n \cdot 2 - 1$$

$$b = n \cdot 2.$$

Diese Zusammenhang zeigt, dass für eine solche Vorrichtung hohe Investitionen notwendig sein. Während einer Überfahrt sind hier kostenintensive Komponenten ungenutzt. So arbeiten die in Fahrtrichtung von der Mitte aus gezählten Druckköpfe (100) und Beschichter (101) nicht. Die Nutzungszeit liegt folglich um 50%.

Diesem Umstand kann Rechnung getragen werden, indem die einzelnen Komponenten - Beschichter (101) und Druckköpfe (100) - verschieblich ausgeführt werden. Dabei reicht es zwei Grenzlagen für jedes Element zu definieren. Eine solche Verschiebevorrichtung kann, im Vergleich zur Verwendung von nicht voll genutzten Beschichtern (101) und Druckköpfen (100), kostengünstig ausgeführt werden. Als weiterer Effekt reduziert sich die Prozesssystembreite und die Vorrichtung kann insgesamt platzsparender aufgebaut werden.

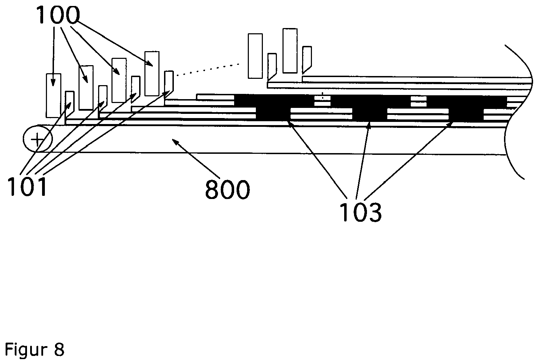

Die Verwendung von sehr vielen Prozesseinheiten (100,101) ermöglicht eine weitere Ausgestaltung der Erfindung (Figur 8). Werden so viele Einheiten angeordnet wie die erforderliche Bauraumhöhe vorgibt, kann ähnlich dem oben beschriebenen Prinzip des Schrägdruckers auf ein Förderband (800) gedruckt werden.

Bei diesem Prinzip fallen keine Nebenzeit mehr an. Die Volumenleistung $V_{Punkt}$ kann einfach über die Verfahrgeschwindigkeit v, die Druckbreite b und die Bauraumhöhe h berechnet werden:

$$V_{Punkt} = b \cdot h \cdot v$$

Bei einer solchen Vorrichtung muss das Prozesssystem aus den Prozesseinheiten zur Wartung vom Förderband (800) weggeschwenkt werden. Während dessen kann ein zweites Prozesssystem eingeschwenkt werden, damit sich kein signifikanter Stillstand ergibt.

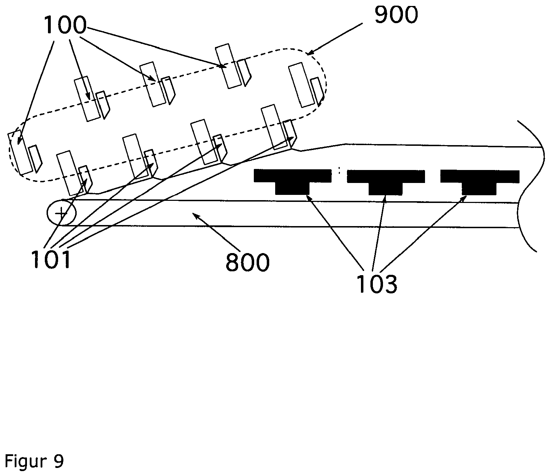

Dieses Problem und die hohen Investitionskosten können, wie bereits beschrieben, nicht erfindungsgemäß durch die Anordnung von Prozesseinheiten in einem Endlossystem (Figur 9) gemildert werden. Dabei wird als Basis das Schrägdruckprinzip verwendet, wobei auch konventionelle Vorrichtungen als Basis dienen können. Abweichend zu obigen Beschreibungen wird das parallel arbeitende Prinzip nicht durch eine vor- und zurücklaufende Prozesseinheiten verwirklicht. Nach dem Vorlauf einer Einheit wird diese nach oben abgehoben und oberhalb des Schichtbildungsbereiches zurückgeführt. In diesem Bereich können Druckkopf- und Beschichterreinigungsstationen angebracht sein. Der Antrieb (900) kann durch eine Kette oder einen Riemen ausgeführt sein. Im Bereich der Schichtbildung werden Präzisionsführungen verwendet.

Die Schichtstärke bei dieser Vorrichtung ist für jede Prozesseinheit getrennt einstellbar. Somit können alle Einheiten parallel zum Aufbauwinkel der Vorrichtung bewegt werden.

Ebenso können die Prozesseinheiten nicht erfindungsgemäß auf einem Rad (1000) angeordnet werden. Hierbei können die Einheiten sich bei der Raddrehung relativ verdrehen. Sie stehen dann immer senkrecht im Raum. Auch ist eine starre Verbindung möglich. Hierbei sind allerdings Lagetolerante Prozesseinheiten zu verwenden. Das heißt, dass die Druckköpfe in jeder Raumlage funktionieren müssen und die Pulverbeschichter zumindest im Bereich der Schichterzeugung mit Partikelmaterial gefüllt sein müssen. Im Vergleich zur Anordnung mit einer Kette können diese Vorrichtung einfacher ausgeführt werden. Um den Schüttwinkel des Partikelmaterials zu berücksichtigen, muss das Rad im Allgemeinen sehr groß ausgeführt werden.

Bezugszeichen liste

| 100 | Druckkopf |
| 101 | Beschichter |
| 102 | Bauplattform |
| 103 | Bauteil |
| 104 | Baubehälter |
| 105 | Druckkopfbahn |
| 106 | Beschichterbahn |
| 107 | Pulverschichten |
| 108 | Richtung der Bauplattformbewegung |
| 109 | Dosierte Tropfen |
| 110 | Pulverwalze |
| 111 | Baufeldberandung |
| 112 | Beschichterspalt |
| 113 | Beschichtervorrat |
| 200 | IR-Strahler |
| 800 | Förderband |
| 900 | Endlosverfahreinheit |
| 1000 | Rad mit Prozesseinheiten |

**Patentansprüche**

1. Verfahren zum Herstellen dreidimensionaler Modelle mittels Schichtaufbautechnik, wobei partikelförmiges Baumaterial in einer definierten Schicht auf ein Baufeld aufgetragen wird und eine Binderflüssigkeit selektiv auf das Baumaterial aufgebracht wird, um einen gewissen Betrag verfahren wird und diese Schritte wiederholt werden, bis das gewünschte Objekt erzeugt ist, wobei die Schritte des Auftragens und Aufbringens im Wesentlichen gleichzeitig stattfinden, und

   das partikelförmige Baumaterial mit einem Beschichter (101) aufgetragen wird und die Binderflüssigkeit mit einem Druckkopf (100) aufgebracht wird, wobei der Beschichter (101) dem Druckkopf (100) nachgeordnet ist und in einem definierten Abstand folgt, und Druckkopf (100) und Beschichter (101) mit im Wesentlichen derselben Geschwindigkeiten verfahren werden und das Auftragen und das Aufbringen im Vor- wie im Rücklauf stattfindet, wobei mehrere Beschichter (101) und Druckköpfe (100) vorgesehen sind, wobei der Zusammenhang zwischen Anzahl b der Beschichter (101) und der Anzahl d der Druckköpfe (100) folgender ist: d = b -1, wobei nach dem Auftragen des partikelförmigen Baumaterials im Vorlauf mittels Beschichter (101) die Binderflüssigkeit mittels Druckkopf (100) im Rücklauf selektiv auf das Baumaterial aufgebracht wird und der Druckkopf (100) und die Beschichter (101) auf einer Verfahreinheit mit gemeinsamen Komponenten auf im Wesentlichen einer Höhe in der Vorrichtung bewegt werden,
   wobei Druckmittel und Beschichtungsmittel so angeordnet sind, dass sie im Vor- wie Rücklauf arbeiten, wobei die Einheiten Druckkopf (100) und Beschichter (101) jeweils zu einer Prozesseinheit zusammengefasst werden, wobei Prozesseinheiten um eine Schichtstärke versetzt angeordnet werden, wobei
   Schichten aufgebracht werden, die beim Rücklauf höher liegen als der unterste Druckkopf (100), wobei vor dem tiefsten Druckkopf (100) ein Beschichter (101) liegt, der das Partikelmaterial beim Verfahren vom Druckkopf (100) fernhält.

2. Verfahren nach Anspruch 1 oder 2, **dadurch gekennzeichnet, dass** das Vorrichtungsmittel Druckkopf (100) dem Vorrichtungsmittel Beschichter (101) in einem definierten Abstand von 1000 mm - 300 mm, bevorzugt von 300 mm - 50 mm, mehr bevorzugt unmittelbar, folgt.

3. Verfahren nach einem der vorhergehenden Ansprüche, **dadurch gekennzeichnet, dass** die Vorrichtungsmittel mit einer Geschwindigkeit von 0,02 m/s bis 1 m/s verfahren werden.

4. Verfahren nach einem der vorhergehenden Ansprüche, **dadurch gekennzeichnet, dass** mehrere Vorrichtungsmittel von Beschichter (101) und Dosiereinheit, vorzugsweise jeweils 2 bis 20, mehr bevorzugt 4 bis 15, mehrere Schichten in einer Überfahrt bilden.

5. Verfahren nach einem der vorhergehenden Ansprüche, **dadurch gekennzeichnet, dass** mehrere Vorrichtungsmittel mehrere Schichten in einer Überfahrt sowohl im Vor- als auch im Rücklauf bilden, vorzugsweise **dadurch gekennzeichnet, dass** mehrere Vorrichtungsmittel mehrere Schichten auf einer kontinuierlich arbeitenden Fördereinheit aufbauen.

6. Verfahren nach einem der vorhergehenden Ansprüche, **dadurch gekennzeichnet, dass** als Basisverfahren ein Schrägdruckverfahren, ein Batchverfahren oder/und ein kontinuierliches Verfahren verwendet wird.

7. Vorrichtung zum Herstellen dreidimensionaler Modelle mittels Schichtaufbautechnik nach einem Verfahren nach einem der Ansprüche 1 - 6, wobei mehrere Beschichter (101) und Druckköpfe (100) vorgesehen sind,
wobei der Zusammenhang zwischen Anzahl b der Beschichter (101) und der Anzahl d der Druckköpfe (100) folgender ist: d = b -1, wobei die Beschichter (101) dem Druckkopf (100) in Verfahrrichtung nachgeordnet positioniert sind und der Druckkopf (100) und die Beschichter (101) auf einer Verfahreinheit mit gemeinsamen Komponenten auf im Wesentlichen einer Höhe in der Vorrichtung angeordnet ist, wobei Druckmittel und Beschichtungsmittel so angeordnet sind, dass sie im Vor- wie Rücklauf arbeiten, wobei die Einheiten Druckkopf (100) und Beschichter (101) jeweils zu einer Prozesseinheit zusammengefasst werden, wobei die Prozesseinheiten um eine Schichtstärke versetzt angeordnet werden, wobei Schichten aufgebracht werden, die beim Rücklauf höher liegen als der unterste Druckkopf (100), wobei vor dem tiefsten Druckkopf (100) ein Beschichter (101) liegt, der das Partikelmaterial beim Verfahren vom Druckkopf (100) fernhält.

8. Vorrichtung nach Anspruch 7, wobei die Vorrichtung zwei, vorzugsweise 3 - 20, Druckmittel, vorzugsweise 2 - 20, Beschichtermittel aufweist.

9. Vorrichtung nach Anspruch 7 oder 8,

   **dadurch gekennzeichnet, dass** das Druckmittel und die Beschichtermittel auf der gleichen Achse angeordnet sind, vorzugsweise
   **dadurch gekennzeichnet, dass** das/die Druckmittel und die Beschichtermittel mit einer Geschwindigkeit von 0,02 m/s bis 5 m/s verfahren werden können.

10. Vorrichtung nach Anspruch 7, 8 oder 9,
    **dadurch gekennzeichnet, dass** das/die Druckmittel und die Beschichtermittel so angeordnet und ausgeführt sind, dass sie im Vorwie im Rücklauf arbeiten können.

11. Vorrichtung nach Anspruch 7, 8, 9 oder 10,
    **dadurch gekennzeichnet, dass** das/die Druckmittel und die Beschichtermittel in verschiedenen Ebenen, vorzugsweise in ihrer Höhe, vorzugsweise in der Z-Achse, verstellbar sind.

12. Vorrichtung nach Anspruch 7, 8, 9, 10 oder 11,
    **dadurch gekennzeichnet, dass** das/die Druckmittel und die Beschichtermittel versetzt angeordnet sind, vorzugsweise dass sie so angeordnet sind, dass sie mehrere Schichten übereinander auftragen und aufbringen können.

13. Vorrichtung nach Anspruch 7, 8, 9, 10, 11 oder 12,
    **dadurch gekennzeichnet, dass** sie eine kontinuierlich arbeitende Fördereinheit aufweist.

14. Vorrichtung nach Anspruch 7, 8, 9, 10, 11, 12 oder 13,
    **dadurch gekennzeichnet, dass** sie als ein Schrägdrucker, ein Batchdrucker oder ein kontinuierlich arbeitender Drucker ausgeführt ist.

15. Vorrichtung nach Anspruch 14,
    **dadurch gekennzeichnet, dass** sie als ein Schrägdrucker ausgeführt ist oder/und die Vorrichtungsmittel in einem vertikalen Karussell oder radartig angeordnet sind.

## Claims

1. A method for producing three-dimensional models by means of a layer construction technique, wherein particulate construction material is deposited in a defined layer onto a construction field and a liquid binding agent is selectively applied onto the construction material, a movement by a certain amount is performed and these steps are repeated, until the desired object is obtained, wherein the steps of deposition and application are performed substantially at the same time, and

   the particulate construction material is deposited by a coater (101) and the liquid binding agent is applied by a print head (100), the coater (101) being arranged downstream of the print head (100) and following it a defined distance, and the print head (100) and coater (101) are moved at substantially the same speed, and the deposition and application take place in both the forward and the reverse direction, a plurality of coaters (101) and print heads (100) being provided, the relationship between the number b of coaters (101) and the number d of print heads (100) being as follows: d = b -1, wherein after the deposition of the particulate construction material in the forward direction by means of coater (101), the liquid binding agent is selectively applied to the construction material in the reverse direction by means of print head (100), and the print head (100) and the coaters (101) are moved on a displacement unit with common components at substantially one height in the device,
   wherein the printing means and coating means are arranged to operate in both the forward and the reverse direction, wherein the units of print head (100) and coater (101) are each combined into one process unit, wherein process units are arranged with an offset of one layer thickness, wherein

layers are applied which are higher than the lowest print head (100) during return travel, wherein a coater (101) is located in front of the lowest print head (100) to keep the particulate material away from the print head (100) during travel.

2. The method according to claim 1 or 2, **characterized in that** the print head (100) as a device means follows the coater (101) as a device means at a defined distance of 1000 mm - 300 mm, preferably 300 mm - 50 mm, more preferably directly.

3. The method according to any one of the preceding claims, **characterized in that** the device means are moved at a speed of 0.02 m/s to 1 m/s.

4. The method according to any one of the preceding claims, **characterized in that** a plurality of device means of the coater (101) and of the metering unit, preferably 2 to 20 each, more preferably 4 to 15, form a plurality of layers in one pass.

5. The method according to any one of the preceding claims, **characterized in that** a plurality of device means form a plurality of layers in one pass both in the forward and in the reverse direction, preferably **characterized in that** a plurality of device means build up a plurality of layers on a continuously operating conveyor unit.

6. The method according to any one of the preceding claims, **characterized in that** an inclined printing process, a batch process or/and a continuous process is used as the basic process.

7. A device for producing three-dimensional models by means of a layer construction technique according to a method of any one of claims 1 - 6, wherein a plurality of coaters (101) and print heads (100) are provided, wherein the relationship between the number b of coaters (101) and the number d of print heads (100) is as follows: d = b -1, wherein the coaters (101) are positioned downstream of the print head (100) in the direction of travel and the print head (100) and the coaters (101) are arranged on a displacement unit with common components at substantially one height in the device, wherein printing means and coating means are arranged to operate in both the forward and the reverse direction, wherein the units print head (100) and coater (101) are each combined into one process unit, wherein the process units are arranged with an offset of one layer thickness, wherein layers are deposited which are higher in the reverse direction than the lowest print head (100), wherein a coater (101) is located in front of the lowest printhead (100) to keep the particulate material away from the printhead (100) during travel.

8. The device according to claim 7, wherein the device comprises two, preferably 3 - 20, printing means, preferably 2-20 coating means.

9. The device according to claim 7 or 8,

   **characterized in that** the printing means and the coating means are arranged on the same axis, preferably
   **characterized in that** the printing means and the coating means can be moved at a speed of 0.02 m/s to 5 m/s.

10. The device according to claim 7, 8 or 9, **characterized in that** the printing means and the coating means are arranged and designed so that they can operate both in the forward and in the reverse direction.

11. The device according to claim 7, 8, 9 or 10, **characterized in that** the printing means and the coating means are adjustable in different planes, preferably in their height, preferably in the Z-axis.

12. The device according to claim 7, 8, 9, 10 or 11, **characterized in that** the printing means and the coating means are arranged in a with an offset, preferably in such a way that they can apply and deposit several layers on top of each other.

13. The device according to claim 7, 8, 9, 10, 11 or 12, **characterized in that** it comprises a continuously operating conveyor unit.

14. The device according to claim 7, 8, 9, 10, 11, 12 or 13, **characterized in that** it is configured as an inclined printer, a batch printer or a continuously operating printer.

15. The device according to claim 14, **characterized in that** it is configured as an inclined printer or/and the device means are arranged in a vertical carousel or in a wheel-like manner.

**Revendications**

1. Procédé de fabrication de modèles tridimensionnels au moyen d'une technique de construction couche par couche, dans lequel un matériau de construction particulaire est déposé en une couche définie sur un champ de construction et un liquide liant est ensuite appliqué sélectivement sur le matériau de construction, est déplacé d'un certain montant, et ces étapes sont répétées jusqu'à ce que l'objet souhaité soit produit, les étapes de déposition et d'application étant sensiblement simultanées, et

le matériau de construction particulaire est déposé par un enducteur (101) et le liquide liant est appliqué par une tête d'impression (100), l'enducteur (101) étant disposé en aval de la tête d'impression (100) et la suivant à une distance définie, et la tête d'impression (100) et l'enducteur (101) sont déplacés essentiellement à la même vitesse, et la déposition et l'application ont lieu à l'aller comme au retour, plusieurs enducteurs (101) et têtes d'impression (100) étant prévus, la relation entre le nombre b d'enducteurs (101) et le nombre d de têtes d'impression (100) étant la suivante : d = b -1, dans lequel, après la déposition du matériau de construction particulaire à l'aller au moyen de l'enducteur (101), le liquide liant est appliqué sélectivement sur le matériau de construction au moyen de la tête d'impression (100) au retour, et la tête d'impression (100) et les enducteurs (101) sont déplacés sur une unité de déplacement ayant des composants communs, sensiblement à la même hauteur dans le dispositif, les moyens d'impression et les moyens d'enduction étant disposés de telle sorte qu'ils fonctionnent à l'aller comme au retour, les unités tête d'impression (100) et enducteur (101) étant respectivement regroupées en une unité de traitement, les unités de traitement étant disposées de manière décalée d'une épaisseur de couche, des couches étant déposées qui, lors du retour, se trouvent plus haut que la tête d'impression la plus basse (100), un enducteur (101) se trouvant devant la tête d'impression la plus basse (100) pour maintenir le matériau particulaire à l'écart de la tête d'impression (100) lors du déplacement.

2. Procédé selon la revendication 1 ou 2, **caractérisé en ce que** le moyen de dispositif constitué par la tête d'impression (100) suit le moyen de dispositif constitué par l'enducteur (101) à une distance définie de 1000 mm - 300 mm, de préférence de 300 mm - 50 mm, plus préférablement directement.

3. Procédé selon l'une quelconque des revendications précédentes, **caractérisé en ce que** les moyens de dispositif sont déplacés à une vitesse de 0,02 m/s à 1 m/s.

4. Procédé selon l'une quelconque des revendications précédentes, **caractérisé en ce que** plusieurs moyens de dispositif de l'enducteur (101) et de l'unité de dosage, de préférence 2 à 20 chacun, plus préférablement 4 à 15, forment plusieurs couches en un seul passage.

5. Procédé selon l'une quelconque des revendications précédentes, **caractérisé en ce que** plusieurs moyens de dispositif forment plusieurs couches en un seul passage aussi bien à l'aller qu'au retour, de préférence
**caractérisé en ce que** plusieurs moyens de dispositif constituent plusieurs couches sur une unité de transport fonctionnant en continu.

6. Procédé selon l'une quelconque des revendications précédentes, **caractérisé en ce qu'**on utilise comme procédé de base un procédé d'impression inclinée, un procédé par lots ou/et un procédé continu.

7. Dispositif de fabrication de modèles tridimensionnels au moyen d'une technique de construction couche par couche par un procédé selon l'une quelconque des revendications 1 à 6, dans lequel il est prévu plusieurs enducteurs (101) et têtes d'impression (100),
dans lequel la relation entre le nombre b d'enducteurs (101) et le nombre d de têtes d'impression (100) est la suivante : d = b -1, dans lequel les enducteurs (101) sont positionnés en aval de la tête d'impression (100) dans la direction de déplacement, et la tête d'impression (100) et les enducteurs (101) sont disposés sur une unité de déplacement ayant des composants communs à sensiblement une même hauteur dans le dispositif, dans lequel le moyen d'impression et le moyen d'enduction sont disposés de telle sorte qu'ils fonctionnent à l'aller comme au retour, les unités tête d'impression (100) et enducteur (101) étant respectivement regroupées en une unité de traitement, les unités de traitement étant disposées avec un décalage d'une épaisseur de couche, des couches étant appliquées qui, lors du retour, se trouvent plus haut que la tête d'impression (100) la plus basse, un enducteur (101) se trouvant devant la tête d'impression (100) la plus basse pour maintenir le matériau particulaire à l'écart de la tête d'impression (100) lors du déplacement.

8. Dispositif selon la revendication 7, dans lequel le dispositif comprend deux, de préférence 3 à 20, moyens d'impression, de préférence 2 à 20 moyens d'enduction.

9. Dispositif selon la revendication 7 ou 8,

**caractérisé en ce que** le moyen d'impression et les moyens d'enduction sont disposés sur le même axe, de préférence
**caractérisé en ce que** le ou les moyens d'impression et les moyens d'enduction peuvent être déplacés à une vitesse de 0,02 m/s à 5 m/s.

**10.** Dispositif selon la revendication 7, 8 ou 9, **caractérisé en ce que** le ou les moyens d'impression et les moyens d'enduction sont disposés et réalisés de manière à pouvoir fonctionner à l'aller comme au retour.

**11.** Dispositif selon la revendication 7, 8, 9 ou 10, **caractérisé en ce que** le ou les moyens d'impression et les moyens d'enduction sont réglables dans différents plans, de préférence dans leur hauteur, de préférence dans l'axe Z.

**12.** Dispositif selon la revendication 7, 8, 9, 10 ou 11, **caractérisé en ce que** le ou les moyens d'impression et les moyens d'enduction sont décalés, de préférence sont disposés de manière à pouvoir déposer et appliquer plusieurs couches l'une sur l'autre.

**13.** Dispositif selon la revendication 7, 8, 9, 10, 11 ou 12, **caractérisé en ce qu'**il comprend une unité de transport fonctionnant en continu.

**14.** Dispositif selon la revendication 7, 8, 9, 10, 11, 12 ou 13, **caractérisée en ce qu'**il est réalisé sous la forme d'une imprimante inclinée, d'une imprimante par lots ou d'une imprimante fonctionnant en continu.

**15.** Dispositif selon la revendication 14, **caractérisé en ce qu'**il est réalisé sous la forme d'une imprimante inclinée ou/et **en ce que** les moyens de dispositif sont disposés dans un carrousel vertical ou à la manière d'une roue.

Figur 1

Figur 2

Figur 3

Figur 4

Figur 5

Figur 6

Figur 7

Figur 8

100    900

101    800    103

Figur 9

Figur 10

**IN DER BESCHREIBUNG AUFGEFÜHRTE DOKUMENTE**

**In der Beschreibung aufgeführte Patentdokumente**

- EP 0431924 B1
- DE 102010015451
- US 2001050448 A1